# EUROPÄISCHE PATENTSCHRIFT

(11) **EP 4 574 716 B1**
(45) Veröffentlichungstag und Bekanntmachung des Hinweises auf die Patenterteilung: **12.08.2026**
(21) Anmeldenummer: 24222288.3
(22) Anmeldetag: 20.12.2024
(51) Int. Cl.: B65G 7/00, B65H 15/02

(54) **VORRICHTUNG ZUM AUSRICHTEN EINES PROFILSTAPELS**
DEVICE FOR ALIGNING A STACK OF PROFILES
DISPOSITIF D'ALIGNEMENT D'UNE PILE DE PROFILÉS

(30) Priorität: 20.12.2023 AT 510302023
(43) Veröffentlichungstag der Anmeldung: 25.06.2025
(73) Patentinhaber: Pamminger Verpackungstechnik Ges.m.b.H., 4020 Linz (AT)
(72) Erfinder: Wittendorfer, Reiner, 4020 Linz (AT)
(74) Vertreter: Hübscher & Partner Patentanwälte GmbH

(56) Entgegenhaltungen:
- DE-U1- 202017 102 571
- FR-A1- 2 588 251
- IT-A1- PD20 090 143
- JP-U- S 573 723
- US-A- 4 070 767
- US-A1- 2021 155 433
- US-B1- 6 238 164

## Beschreibung

Die Erfindung bezieht sich auf eine Vorrichtung sowie ein Verfahren zum Ausrichten eines vorzugsweise biegefeste Profile aufweisenden Profilstapels, insbesondere mit einer Mindeststapellänge von 1000 mm, einer Mindeststapelbreite von 300 mm bzw. einer Mindeststapelhöhe von 100 mm. Dabei ist eine Ausrichteinheit vorgesehen, in bzw. von deren Aufnahmebereich der Profilstapel über eine Einschubebene zu- bzw. abförderbar ist, wobei die Ausrichteinheit eine Stapelauflage, einen Tiefenanschlag, zwei sich in einer Anschlagrichtung gegenüberliegende und relativ zueinander verlagerbare Seitenanschläge, sowie einen quer zur Anschlagrichtung verlagerbaren, mit der Deckseite des Profilstapels zusammenwirkenden Niederhalter umfasst, wobei die Stapelauflage, der Tiefenanschlag, die Seitenanschläge und der Niederhalter gemeinsam um eine parallel zur Anschlagrichtung verlaufende Rotationsachse zwischen einer Aufnahmelage und einer Ausrichtlage um einen Schwenkwinkel verschwenkbar sind, und wobei die Stapelauflage, der Tiefenanschlag, die Seitenanschläge und / oder der Niederhalter an einem gemeinsamen Rahmen angeordnet sind, welcher um die Rotationsachse zwischen einer Aufnahmelage und einer Ausrichtlage verschwenkbar ist.

Bei der Handhabung von Profilstapeln ergibt sich in der Praxis regelmäßig die Schwierigkeit, dass die Stapel insbesondere für Transportzwecke möglichst bündig ausgerichtet sein müssen. Im Zusammenhang mit Profilstapeln wie beispielsweise Holzbrettstapeln sind Vorrichtungen bekannt (DE2432738C3), die auf einem Längsförderer angeordnete und quer zur Längsrichtung verlagerbare Seitenanschläge aufweisen. Durch die Beaufschlagung des Stapels an dessen den Seitenanschlägen zugewandten Stapelseiten wird allerdings lediglich eine bündige Ausrichtung bezogen auf die Stapelbreite erreicht. Demzufolge müssen im Anschluss daran für eine ebenfalls in Bezug auf die Stapellänge bündige Ausrichtung zusätzliche Maßnahmen getroffen werden.

Des Weiteren ist aus US 2021/155433 A1 eine Vorrichtung gemäß dem Oberbegriff des unabhängigen Anspruchs 1 bekannt.

Der Erfindung liegt somit die Aufgabe zugrunde, eine Vorrichtung zum Ausrichten eines Profilstapels so auszugestalten, dass auf möglichst effiziente Weise und mit einfachen konstruktiven Mitteln ein zuverlässiges bündiges Ausrichten von Profilstapeln ermöglicht wird.

Die Erfindung löst die gestellte Aufgabe ausgehend von einer Vorrichtung der eingangs geschilderten Art dadurch, dass der gemeinsame Rahmen mit einem Vibrationsantrieb so antriebsverbunden ist, dass der Profilstapel in Ausrichtlage mit im Wesentlichen um die Rotationsachse schwenkenden Oszillationsbewegungen beaufschlagbar ist.

Zufolge dieser Maßnahmen begrenzen die Stapelauflage, der Tiefenanschlag, die Seitenanschläge und der Niederhalter gemeinsam den Aufnahmebereich, welcher somit an einer Seite über die eine Vertikalebene definierende Einschubebene für den auszurichtenden Profilstapel zugänglich ist. Konstruktiv günstige Bedingungen ergeben sich, wenn die Stapelauflage, der Tiefenanschlag, die Seitenanschläge und der Niederhalter jeweils Anschlag- bzw. Wirkebenen definieren, sodass diese gemeinsam mit der Einschubebene in Aufnahmelage einen im Wesentlichen quaderförmigen Aufnahmeraum begrenzen. Insbesondere bilden dabei die einander gegenüberliegenden Seitenschlagebenen die entsprechenden Stirnseiten, die normal darauf stehenden Ebenen des Niederhalters und der Stapelauflage die Deck- bzw. Unterseite und die Tiefenanschlagebene die Rückseite, während die Einschubebene bzw. die offene Seite des Aufnahmeraums der Vorderseite entspricht. Zum Ausrichten kann der in den Aufnahmebereich eingeführte und an der dortigen Stapelauflage aufliegende Profilstapel mit seiner der Einschubebene gegenüberliegenden Rückseite an den Tiefenanschlag angelegt und über die Verlagerung der entsprechenden Seitenanschläge und des Niederhalters in der Aufnahmelage vorpositioniert werden. Vorzugsweise bildet in Aufnahmelage die dem Niederhalter zugeordnete Deckseite des Profilstapels dessen oberste Fläche. Der Erfindung liegt die Erkenntnis zugrunde, dass bei gewissen Profilstapeln, insbesondere bei Profilstapeln auf Basis von Holzbrett- bzw. Holzplattenprofilen, in Abhängigkeit der Oberflächenrauheit und eines ggf. auftretenden Vakuumeffekts ein für das Ausrichten des Stapels erforderliches Gegeneinanderverschieben benachbarter Profile durch die auftretende Haftreibung erschwert wird. Erfindungsgemäß wird daher vorgeschlagen, den im Aufnahmebereich vorpositionierten Profilstapel um einen Schwenkwinkel von einer Aufnahmelage in eine Ausrichtlage derart zu verschwenken, dass das für das Ausrichten erforderliche Gegeneinanderverschieben der einzelnen Profile schwerkraftunterstützt erfolgen kann, während der Profilstapel durch die Seitenanschläge, den Niederhalter und den Tiefenanschlag bündig festgelegt wird. Hierbei ruht der verschwenkte Profilstapel in der Ausrichtlage mit seiner Rückseite im Wesentlichen schwerkraftbedingt auf dem Tiefenanschlag auf, wobei in dieser Lage nicht mehr die dem Niederhalter zugeordnete Deckseite des Profilstapels, sondern die in Aufnahmelage zunächst noch parallel zur Einschubebene verlaufende Vorderseite des Profilstapels somit dessen oberste Fläche definiert. Grundsätzlich kann vorgesehen sein, dass die Seitenanschläge teilweise erst während des Schwenkvorgangs bzw. nachdem der Profilstapel in die Ausrichtlage verschwenkt wurde, relativ zueinander verlagert und somit erst in Ausrichtlage vollständig an den Profilstapel bezüglich dessen Stirnseiten angestellt werden. Der für das Ausrichten notwendige Schwenkwinkel beträgt vorzugsweise über 45°, bevorzugter über 60°, bevorzugter zwischen 70 und 110°, bevorzugter zwischen 80 und 100°, besonders bevorzugt 90°. Nachdem der Profilstapel ausgerichtet wurde, wird dieser wieder in die Aufnahmelage zurückgeschwenkt, freigegeben und aus dem Aufnahmebereich abgefördert.

Eine kompakte und robuste Bauweise wird dadurch erreicht, dass die Stapelauflage, der Tiefenanschlag, die Seitenanschläge und / oder der Niederhalter an einem gemeinsamen Rahmen angeordnet sind, welcher um die Rotationsachse zwischen der Aufnahmelage und der Ausrichtlage verschwenkbar ist. Besonders günstige konstruktive Bedingungen ergeben sich, wenn am Rahmen beiderends, bezogen auf die Anschlagrichtung, entsprechende Stellzylinder angreifen, welche drehbar um eine parallel zur Anschlagrichtung verlaufende Rotationsachse am Rahmen und / oder an einem Basisgestell gelagert sind. Dementsprechend verläuft die Wirkachse der jeweiligen Stellzylinder normal zu dieser Rotationsachse. Vorzugsweise ist der Rahmen beiderends ausschließlich über die den jeweiligen Stellzylindern zugeordneten Drehlager am Basisgestell gelagert.

Erfindungsgemäß ist der gemeinsame Rahmen mit einem Vibrationsantrieb so antriebsverbunden ist, dass der Profilstapel in Ausrichtlage mit im Wesentlichen um die Rotationsachse schwenkenden Oszillationsbewegungen beaufschlagbar ist. Dabei können die bereits oben erwähnten Stellzylinder den Vibrationsantrieb bilden. Aufgrund der Oszillationsbewegungen werden auch stark aneinanderhaftende Profile so voneinander gelöst, dass diese problemlos aneinander abgleiten können und der Profilstapel in Ausrichtlage bündig ausgerichtet werden kann. Der Niederhalter bleibt dabei grundsätzlich auf einem vorgegebenen Abstand zur Deckseite des Profilstapels, sodass ein für den Ausrichtvorgang notwendiges Bewegungsspiel für die Profile eingehalten werden kann. Der vorgegebene Abstand des Niederhalters zur Deckseite des Profilstapels kann beispielsweise 1 bis 5 % der Profilstapelhöhe betragen. In diesem Zusammenhang ist es daher grundsätzlich auch empfehlenswert, wenn erst während der Vibration bzw. den Oszillationsbewegungen der bzw. die Seitenanschläge gegen die Stirnseiten des Profilstapes andrücken. Um ein zuverlässiges Ausrichten zu begünstigen und dabei die Gefahr von Beschädigungen am Profilstapel zu verringern, empfiehlt es sich, dass die Oszillationsfrequenz im Bereich von 1 bis 5 Hz liegen kann. Die Oszillationsamplitude kann im Bereich von +/- 1 mm bis +/- 50 mm liegen, wobei dies vorzugsweise auf die entsprechenden Stellzylinder bezogen ist.

Grundsätzlich können beide Seitenanschläge jeweils mithilfe von Stelltrieben verlagerbar ausgebildet sein, wobei unterstützend vorgesehen sein kann, dass der bzw. die entsprechenden Stelltriebe ebenfalls einen Vibrationsantrieb bilden, sodass der Profilstapel auch über wenigstens einen Seitenanschlag mit einer Oszillationsbewegung beaufschlagt werden kann. Der wenigstens eine Seitenschlag kann dabei wiederholt gegen die ihm zugewandte Stirnseite des Profilstapes fahren, sodass der Impuls der diesbezüglichen Oszillationsbewegung vorteilhaft für die Ausrichtung des Profilstapels ausgenutzt werden kann. Vorzugsweise erfolgt das wiederholte Anfahren gegen die Stirnseite des Profilstapels bzw. die damit einhergehende Oszillationsbewegung 2 bis 5 Mal. Es empfiehlt sich, dass der bzw. die Seitenanschläge erst gegen die Stirnseiten des Profilstapes andrücken, sobald die bereits weiter oben näher beschriebenen, um die Rotationsachse schwenkenden Oszillationsbewegungen des Profilstapels erfolgen. **In** einer bevorzugten Ausführungsform ist vorgesehen, dass nur einer der Seitenanschläge mittels eines Lineartriebs relativ zu dem in Anschlagrichtung gegenüberliegenden, stationären Seitenanschlag verlagerbar ist. Es versteht sich von selbst, dass auch der Niederhalter zum Anstellen gegen die Deckseite des Profilstapels mit einem entsprechenden Stelltrieb antriebsverbunden ist.

Um auf einfache Weise Profilstapel mit jeweils unterschiedlichen Stapeldimensionen ausrichten zu können, wird vorgeschlagen, dass ein Seitenanschlag mehrere mit Abstand zueinander angeordnete Anschlagelemente aufweist, die in korrespondierende, in Anschlagrichtung verlaufende Ausnehmungen des Niederhalters einführbar sind. Die Anschlagelemente einerseits sowie die Ausnehmungen des Niederhalters andererseits sind dabei vorzugsweise dergestalt, dass diese bei einer Verlagerung des die Anschlagelemente aufweisenden Seitenschlages in Anschlagrichtung ineinander kämmen, sodass dementsprechend auch Profilstapel mit kleinerer Stapellänge sicher zwischen den Seitenanschlägen festgelegt werden können.

**In** diesem Zusammenhang ergeben sich günstige konstruktive Bedingungen, wenn die in Anschlagrichtung verlaufenden Ausnehmungen des Niederhalters durch parallele, mit Abstand zueinander angeordnete Stäbe gebildet sind. Vorzugsweise sind auch die Anschlagelemente parallel zueinander anordnet. Die Anschlagelemente erstrecken sich insbesondere der Höhe nach in einem rechten Winkel zum Niederhalter bzw. zu dessen Stäben. Die Stäbe können fliegend bzw. freistehend an einem Lagerarm des Niederhalters gelagert sein, sodass die freien Enden der Stäbe den Anschlagelementen des entsprechenden Seitenanschlages zugewandt sind.

Damit der fertig ausgerichtete Profilstapel problemlos aus dem Aufnahmebereich abgefördert werden kann, ohne dabei Gefahr zu laufen, festgeklemmt zu bleiben, wird vorgeschlagen, dass die Anschlagsfläche des stationären Seitenanschlags mit der Einschubebene einen Öffnungswinkel über 90°, vorzugsweise von 96°, aufspannt. Zufolge dieser Maßnahme bildet sich ein gewisses Spaltmaß zwischen dem stationären Seitenschlag und der diesem zugewanderten Profilstapelseite, sodass letzterer beim Abfördern aus dem Aufnahmebereich nicht vom Seitenanschlag behindert wird. Der Öffnungswinkel ist dabei so zu wählen, dass ein maximal zulässiger Seitenüberstand des Profilstapels von höchstens 4 cm nicht überschritten wird. Demgemäß haben sich ca. 96° als besonders günstig erwiesen.

Zum Zwecke einer verbesserten Handhabung des Profilstapels sowie zur Verringerung der Beschädigungsgefahr desselben kann der Tiefenanschlag eine in Anschlagrichtung verlaufende Reihe drehbar gelagerter Stützrollen umfassen. Grundsätzlich kann auch vorgesehen sein, dass die Stapelauflage eine Reihe drehbar gelagerter Stützrollen aufweist, wobei die Reihe hierbei quer zur Anschlagrichtung verlaufen muss bzw. sich die einzelnen Stützrollen parallel zur Anschlagrichtung erstrecken. Ebenso ist es grundsätzlich denkbar, dass der stationäre Seitenanschlag eine Reihe drehbar gelagerter Stützrollen umfasst, wobei dementsprechend die Reihe quer zur Anschlagrichtung in Richtung des Tiefenanschlages verläuft bzw. sich die einzelnen Stützrollen normal zur Anschlagrichtung lotrecht erstrecken.

Die erfindungsgemäßen Maßnahmen schaffen die Voraussetzung dafür, dass entlang einer durch einen Längsförderer gebildeten Förderstraße etwaige auszurichtende Profilstapel weitgehend entkoppelt vom Längsförderer ausgerichtet werden können, sodass der grundsätzliche Förderfluss durch den Ausrichtvorgang kaum unterbrochen bzw. verlangsamt wird. Hierzu können grundsätzlich auch mehrere erfindungsgemäße Ausrichteinheiten entlang der Förderstraße neben dem in einer Längsförderrichtung verlaufenden Längsförderer angeordnet sein. Zur Übergabe eines auszurichtenden Profilstapels vom Längsförderer in eine Ausrichteinheit in einer Querrichtung können entsprechende Querförderer vorgesehen sein. Beispielsweise kann der Längsförderer in Längsförderrichtung verlaufende und mit Abstand zueinander angeordnete, parallele Förderelemente, z.B. Förderbänder, aufweisen, wobei in den diesbezüglichen Zwischenräumen entsprechende aus- und einziehbare Querförderelemente, z.B. Förderrollen, angeordnet sind. Unterstützend für die Querförderung kann auch vorgesehen sein, dass etwaige Stützrollen der Stapelauflage mit einem Förderantrieb verbunden sind.

Die Erfindung bezieht sich auch auf ein Verfahren zum Ausrichten eines Profilstapels, mit einer erfindungsgemäßen Vorrichtung. Dabei wird der auszurichtende Profilstapel durch die Einschubebene hindurch, beispielsweise von einem Längsförderer kommend, in den Aufnahmebereich der Ausrichteinheit zugefördert und mit seiner der Einschubebene gegenüberliegenden Rückseite am Tiefenanschlag angelegt. Zum Festlegen des Profilstapels werden die Seitenanschläge und der Niederhalter an den Profilstapel angestellt, wobei die Stapelauflage, der Tiefenanschlag, die Seitenanschläge und der Niederhalter gemeinsam um die parallel zur Anschlagrichtung verlaufende Rotationsachse von der Aufnahmelage und der Ausrichtlage um einen Schwenkwinkel ausgeschwenkt und schließlich wieder in die Aufnahmelage zurückgeschwenkt werden. Schließlich wird der ausgerichtete Profilstapel aus dem Aufnahmebereich der Ausrichteinheit, beispielsweise wiederum zurück zum Längsförderer, abgefördert. Vorzugsweise kann vorgesehen sein, dass in Ausrichtlage der ausgeschwenkte Profilstapel mit in Rotationsrichtung und / oder in Anschlagrichtung verlaufenden Oszillationsbewegungen beaufschlagt wird. Grundsätzlich können die Seitenanschläge teilweise erst während des Schwenkvorgangs bzw. nachdem der Profilstapel in die Ausrichtlage verschwenkt wurde, relativ zueinander verlagert und somit erst in Ausrichtlage vollständig an den Profilstapel bezüglich dessen Stirnseiten angestellt werden.

**In** der Zeichnung ist der Erfindungsgegenstand beispielsweise dargestellt. Es zeigen
- Fig. 1: einen schematischen Schrägriss einer erfindungsgemäßen Vorrichtung mit einem Rahmen in Aufnahmelage,
- Fig. 2: eine der Fig. 1 entsprechende, rückseitig betrachtete Darstellung mit dem Rahmen in Ausrichtlage,
- Fig. 3: eine der Fig. 1 entsprechende Darstellung mit angestelltem Seitenanschlag und Niederhalter und
- Fig. 4: eine Draufsicht in einem größeren Maßstab mit einem Detailausschnitt eines stationären Seitenanschlages.

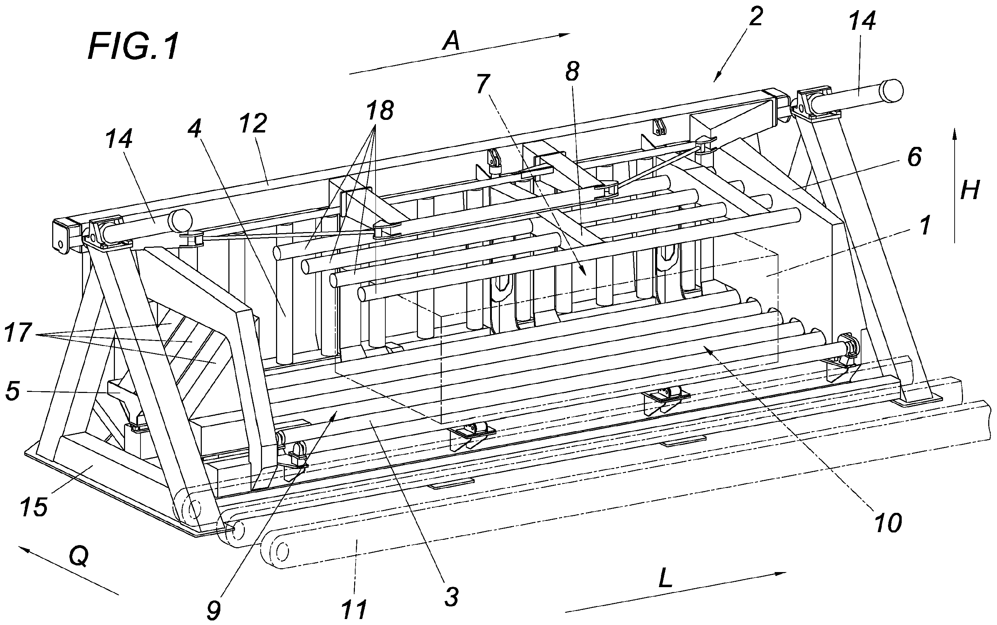

Eine erfindungsgemäße Vorrichtung zum Ausrichten eines in einer Aufbauhöhe H übereinander gestapelte Profile aufweisenden Profilstapels 1 umfasst eine Ausrichteinheit 2, die eine Stapelauflage 3, einen Tiefenanschlag 4, zwei sich in einer Anschlagrichtung A gegenüberliegende und relativ zueinander verlagerbare Seitenanschläge 5, 6, sowie einen quer zur Anschlagrichtung A verlagerbaren, mit der Deckseite 7 des Profilstapels 1 zusammenwirkenden Niederhalter 8 aufweist. Die Stapelauflage 3, der Tiefenanschlag 4, die Seitenanschläge 5, 6 und der Niederhalter 8 begrenzen einen Aufnahmebereich 9. Wie dies insbesondere aus den Fig. 1 bis 3 hervorgeht, weist der Tiefenanschlag 4 eine in Anschlagrichtung A verlaufende Reihe drehbar gelagerter Stützrollen auf. Die Stapelauflage 3 weist ebenfalls eine Reihe drehbar gelagerter Stützrollen auf, wobei die Reihe hierbei allerdings quer zur Anschlagrichtung A verläuft bzw. sich die einzelnen Stützrollen der Stapelauflage 3 parallel zur Anschlagrichtung A erstrecken.

Der Aufnahmebereich 9 ist somit von einer Seite über eine eine Vertikalebene definierende Einschubebene für den auszurichtenden Profilstapel 1 zugänglich, wobei diese gedachte Einschubebene in der in Fig.1 gezeigten Aufnahmelage parallel zur Vorderseite 10 des Profilstapels 1 verläuft. Der auszurichtende bzw. letztlich fertig ausgerichtete Profilstapel 1 wird zwischen einem in einer Längsförderrichtung L verlaufenden Längsförderer 11 und der Ausrichteinheit 2 mithilfe eines nicht näher dargestellten Querförderers in einer Querförderrichtung Q übergeben. Die Längsförderrichtung L und die Anschlagrichtung A verlaufen parallel zueinander, wohingegen die Querförderrichtung Q normal zur Längsförderrichtung L verläuft. Der Querförderer kann beispielsweise Querförderelemente in Form von Förderrollen mit parallel zur Längsförderrichtung L verlaufenden Rotationsachsen aufweisen, wobei derartige Förderrollen in den Zwischenräumen der z.B. als Förderbänder ausgebildeten Längsförderelemente aus- bzw. einziehbar angeordnet sind.

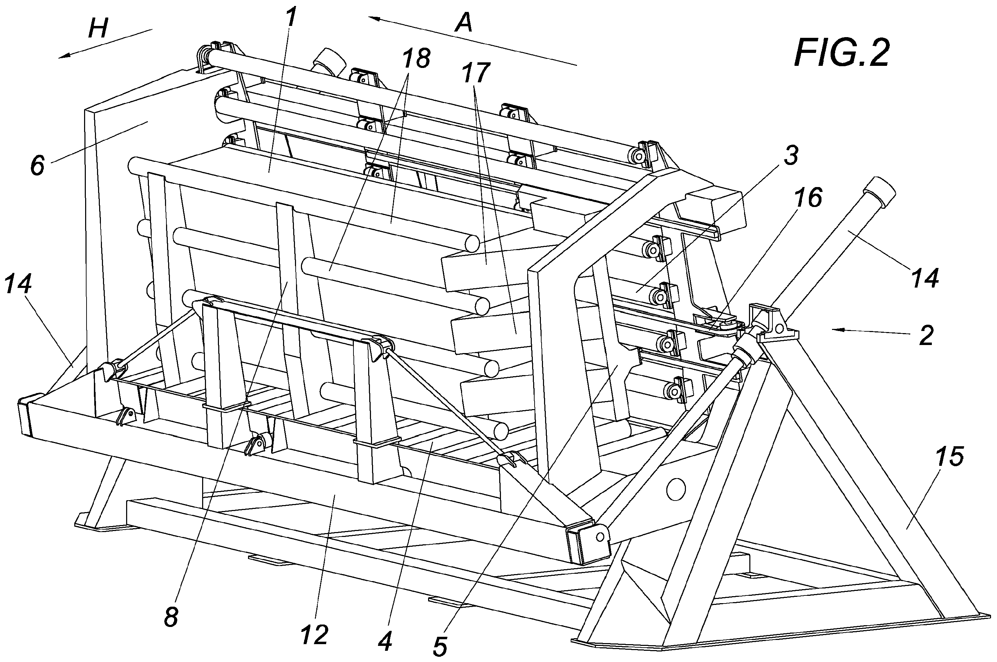

Die Stapelauflage 3, der Tiefenanschlag 4, die Seitenanschläge 5, 6 und der Niederhalter 8 sind an einem gemeinsamen Rahmen 12 angeordnet, welcher um eine Rotationsachse zwischen der Aufnahmelage gemäß Fig. 1 und der Ausrichtlage gemäß Fig. 2 verschwenkbar ist. Dabei ist der gemeinsame Rahmen 12 mit einem durch Stellzylinder 14 gebildeten Vibrationsantrieb so antriebsverbunden, dass der Profilstapel 1 in Ausrichtlage mit im Wesentlichen um die Rotationsachse schwenkenden Oszillationsbewegungen beaufschlagbar ist. Die Stellzylinder sind jeweils sowohl am Rahmen 12 als auch an einem Basisgestell 15 angelenkt, wie dies aus der Zeichnung ersichtlich ist. Aufgrund der Oszillationsbewegungen werden auch stark aneinanderhaftende Profile so voneinander gelöst, dass diese problemlos aneinander abgleiten können und der Profilstapel 1 in Ausrichtlage bündig ausgerichtet werden kann.

Der Seitenanschlag 5 ist mittels eines Lineartriebs 16 relativ zu dem in Anschlagrichtung A gegenüberliegenden, stationären Seitenanschlag 6 verlagerbar. Grundsätzlich kann der Lineartrieb 16 einen Vibrationsantrieb bilden, sodass der Profilstapel 1 über den Seitenanschlag 5 mit einer in Anschlagrichtung A verlaufenden Oszillationsbewegung beaufschlagt werden kann. Der Niederhalter 8 ist zum Anstellen gegen die Deckseite 7 des Profilstapels 1 ebenfalls mit einem entsprechenden, nicht näher dargestellten Stelltrieb antriebsverbunden.

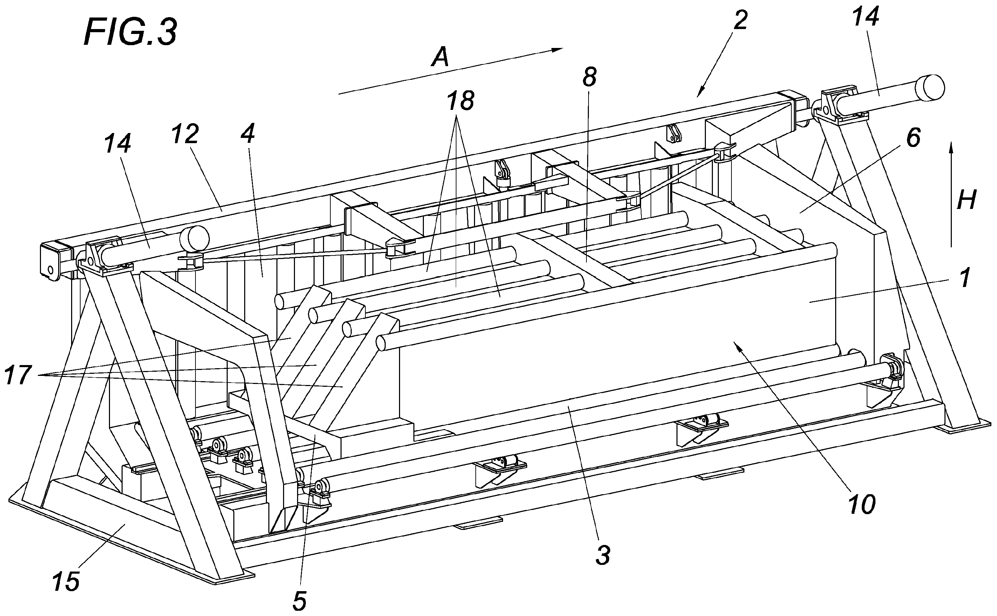

**In** Fig. 3 ist gut zu erkennen, dass der verlagerbare Seitenanschlag 5 mehrere mit Abstand zueinander angeordnete Anschlagelemente 17 aufweist, die in korrespondierende, in Anschlagrichtung A verlaufende Ausnehmungen des Niederhalters 8 einführbar sind, sodass die Anschlagelemente 17 kämmend in die Ausnehmungen des Niederhalters 8 eingreifen. Dadurch können auch Profilstapel mit jeweils unterschiedlichen Stapeldimensionen zuverlässig ausgerichtet werden. Die Ausnehmungen des Niederhalters 8 sind durch parallele, mit Abstand zueinander angeordnete Stäbe 18 gebildet.

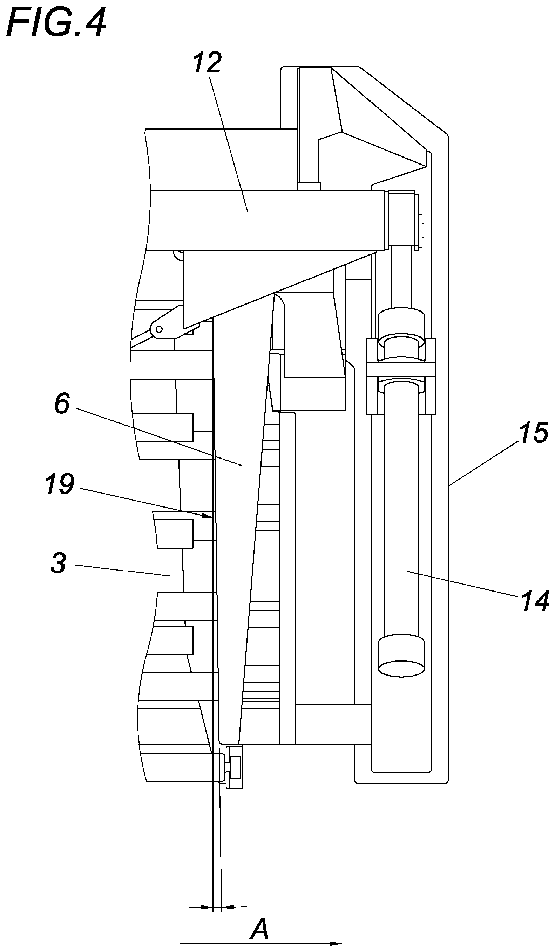

Wie dies in der Draufsicht in Fig. 4 veranschaulicht werden soll, bildet die Anschlagsfläche 19 des stationären Seitenanschlags 6 keinen rechten Winkel mit der Einschubebene, sondern spannt mit dieser einen Öffnungswinkel über 90°, vorzugsweise von 96°, auf. Somit kann unter Berücksichtigung eines maximal zulässigen seitlichen Überstandes am Profilstapel 1 dieser nach Freigabe wieder aus dem Aufnahmebereich 9 abgefördert werden, ohne dabei durch den stationären Seitenanschlag 6 behindert zu werden.

## Patentansprüche

1. Vorrichtung zum Ausrichten eines Profilstapels (1) mit einer Mindeststapellänge von 1000 mm, einer Mindeststapelbreite von 300 mm und einer Mindeststapelhöhe von 100 mm , wobei eine Ausrichteinheit (2), in bzw. von deren Aufnahmebereich (9) der Profilstapel (1) über eine Einschubebene zu- bzw. abförderbar ist, wobei die Ausrichteinheit (2) eine Stapelauflage (3), einen Tiefenanschlag (4), zwei sich in einer Anschlagrichtung (A) gegenüberliegende und relativ zueinander verlagerbare Seitenanschläge (5, 6), sowie einen quer zur Anschlagrichtung (A) verlagerbaren, mit der Deckseite (7) des Profilstapels (1) zusammenwirkenden Niederhalter (8) umfasst, wobei die Stapelauflage (3), der Tiefenanschlag (4), die Seitenanschläge (5, 6) und der Niederhalter (8) gemeinsam um eine parallel zur Anschlagrichtung (A) verlaufende Rotationsachse zwischen einer Aufnahmelage und einer Ausrichtlage um einen Schwenkwinkel verschwenkbar sind, und wobei die Stapelauflage (3), der Tiefenanschlag (4), die Seitenanschläge (5, 6) und / oder der Niederhalter (8) an einem gemeinsamen Rahmen (12) angeordnet sind, welcher um die Rotationsachse zwischen einer Aufnahmelage und einer Ausrichtlage verschwenkbar ist, **dadurch gekennzeichnet, dass** der gemeinsame Rahmen (12) mit einem Vibrationsantrieb so antriebsverbunden ist, dass der Profilstapel (1) in Ausrichtlage mit im Wesentlichen um die Rotationsachse schwenkenden Oszillationsbewegungen beaufschlagbar ist, wobei am Rahmen beiderends, bezogen auf die Anschlagrichtung (A), Stellzylinder (14) angreifen, welche drehbar um eine parallel zur Anschlagrichtung (A) verlaufende Rotationsachse am Rahmen (12) und / oder an einem Basisgestell (15) gelagert sind.

2. Vorrichtung nach Anspruch 1, **dadurch gekennzeichnet, dass** ein Seitenanschlag (5) mehrere mit Abstand zueinander angeordnete Anschlagelemente (17) aufweist, die in korrespondierende, in Anschlagrichtung (A) verlaufende Ausnehmungen des Niederhalters (8) einführbar sind.

3. Vorrichtung nach Anspruch 2, **dadurch gekennzeichnet, dass** die in Anschlagrichtung (A) verlaufenden Ausnehmungen des Niederhalters (8) durch parallele, mit Abstand zueinander angeordnete Stäbe (18) gebildet sind.

4. Vorrichtung nach einem der Ansprüche 1 bis 3, **dadurch gekennzeichnet, dass** einer der Seitenanschläge (5) mittels eines Lineartriebs (16) relativ zu dem in Anschlagrichtung (A) gegenüberliegenden, stationären Seitenanschlag (6) verlagerbar ist.

5. Vorrichtung nach Anspruch 4, **dadurch gekennzeichnet, dass** die Anschlagsfläche (19) des stationären Seitenanschlags (6) mit der Einschubebene einen Öffnungswinkel über 90°, vorzugsweise von 96°, aufspannt.

6. Vorrichtung nach einem der Ansprüche 1 bis 5, **dadurch gekennzeichnet, dass** der Tiefenanschlag (4) eine in Anschlagrichtung (A) verlaufende Reihe drehbar gelagerter Stützrollen umfasst.

7. Vorrichtung nach einem der Ansprüche 1 bis 6, **gekennzeichnet durch** einen in einer Längsförderrichtung (L) verlaufenden Längsförderer (11) für den Profilstapel (1) sowie einem Querförderer zur Übergabe des Profilstapels (1) zwischen dem Längsförderer (11) und der Ausrichteinheit (2) in einer Querförderrichtung (Q).

8. Verfahren zum Ausrichten eines Profilstapels (1), mit einer Vorrichtung nach einem der Ansprüche 1 bis 7, wobei der auszurichtende Profilstapel (1) durch die Einschubebene hindurch in den Aufnahmebereich (9) der Ausrichteinheit (2) zugefördert und mit seiner der Einschubebene gegenüberliegenden Rückseite am Tiefenanschlag (4) angelegt wird, und dass zum Festlegen des Profilstapels (1) die Seitenanschläge (5, 6) und der Niederhalter (8) an den Profilstapel (1) angestellt werden, wobei die Stapelauflage (3), der Tiefenanschlag (4), die Seitenanschläge (5, 6) und der Niederhalter (8) gemeinsam um die parallel zur Anschlagrichtung (A) verlaufende Rotationsachse von der Aufnahmelage und der Ausrichtlage um einen Schwenkwinkel ausgeschwenkt und schließlich wieder in die Aufnahmelage zurückgeschwenkt werden, wonach der ausgerichtete Profilstapel (1) aus dem Aufnahmebereich (9) der Ausrichteinheit (2) abgefördert wird, **dadurch gekennzeichnet, dass** in Ausrichtlage der ausgeschwenkte Profilstapel (1) mit in Rotationsrichtung und / oder in Anschlagrichtung (A) verlaufenden Oszillationsbewegungen beaufschlagt wird, wobei während der Oszillationsbewegungen der vorgegebene Abstand des Niederhalters (8) zur Deckseite (7) des Profilstapels (1) 1 bis 5 % der Profilstapelhöhe beträgt.

## Claims

1. A device for aligning a stack of profiles (1) with a minimum stack length of 1000 mm, a minimum stack width of 300 mm, and a minimum stack height of 100 mm, wherein an alignment unit (2) is arranged such that the stack of profiles (1) can be fed in or out via a feed plane from or to its receiving area (9), wherein the alignment unit (2) comprises a stack support (3), a depth stop (4), two side stops (5, 6) which are opposite each other in an stop direction (A) and can be moved relative to each other, and a downholder (8) which is movable transversely to the stop direction (A) and cooperates with the top surface (7) of the stack of profiles (1), wherein the stack support (3), the depth stop (4), the side stops (5, 6) and the downholder (8) are jointly pivotable about a rotation axis running parallel to the stop direction (A) between a receiving position and an alignment position, and wherein the stack support (3), the depth stop (4), the side stops (5, 6) and/or the downholder (8) are arranged on a common frame (12) which is pivotable about the rotation axis between a receiving position and an alignment position, **characterized in that** the common frame (12) is drivingly connected to a vibration drive in such a way that the stack of profiles (1) can be acted upon with oscillating movements essentially pivoting about the rotation axis in the alignment position, wherein at both ends of the frame, with respect to the stop direction (A), actuating cylinders (14) act on it, which are rotatably mounted on the frame (12) and/or on a base frame (15) about a rotation axis running parallel to the stop direction (A).

2. Device according to claim 1, **characterized in that** one of the side stops (5) has a plurality of stop elements (17) arranged at a distance from each other, which can be inserted into corresponding recesses in the downholder (8), which recesses are running in the stop direction (A).

3. Device according to claim 2, **characterized in that** the recesses in the downholder (8) running in the stop direction (A) are formed by parallel bars (18) arranged at a distance from each other.

4. Device according to one of claims 1 to 3, **characterized in that** one of the side stops (5) can be moved, by means of a linear drive (16), relative to the stationary side stop (6) located opposite it in the stop direction (A).

5. Device according to claim 4, **characterized in that** the stop surface (19) of the stationary side stop (6) forms an opening angle of more than 90°, preferably of 96°, with the feed plane.

6. Device according to one of claims 1 to 5, **characterized in that** the depth stop (4) comprises a row of rotatably mounted support rollers, which row is running in the stop direction (A).

7. Device according to one of claims 1 to 6, **characterized by** a longitudinal conveyor (11) for the stack of profiles (1), which longitudinal conveyor (11) runs in a longitudinal conveying direction (L), and a transverse conveyor for transferring the stack of profiles (1) between the longitudinal conveyor (11) and the alignment unit (2) in a transverse conveying direction (Q).

8. Method for aligning a stack of profiles (1), using a device according to one of claims 1 to 7, wherein the stack of profiles (1) to be aligned is fed through the feed plane into the receiving area (9) of the alignment unit (2) and its rear side opposite the feed plane is placed against the depth stop (4), and in that the side stops (5, 6) and the downholder (8) are moved onto the stack of profiles (1) to fix it, wherein the stack support (3), the depth stop (4), the side stops (5, 6) and the downholder (8) are jointly pivoted about the rotation axis running parallel to the stop direction (A) from the receiving position and the alignment position by a pivoting angle and finally pivoted back into the receiving position, after which the aligned stack of profiles (1) is fed out of the receiving area (9) of the alignment unit (2), **characterized in that**, in the alignment position, the pivoted stack of profiles (1) is acted upon with oscillating movements running in the direction of rotation and/or in the stop direction (A), wherein during the oscillating movements, the predetermined distance between the downholder (8) and the top surface (7) of the stack of profiles (1) is 1 to 5% of the stack height.

## Revendications

1. Dispositif destiné à l'alignement d'une pile de profilés (1) présentant une longueur minimale de pile de 1 000 mm, une largeur minimale de pile de 300 mm et une hauteur minimale de pile de 100 mm, dans lequel une unité d'alignement (2), dans ou depuis la zone de réception (9) de laquelle la pile de profilés (1) peut être amenée ou évacuée via un plan d'insertion, l'unité d'alignement (2) comportant un support de pile (3), une butée de profondeur (4), deux butées latérales (5, 6) opposées dans une direction de butée (A) et déplaçables l'une par rapport à l'autre, ainsi qu'un dispositif de maintien (8) déplaçable transversalement à la direction de butée (A) et coopérant avec la face supérieure (7) de la pile de profilés (1), le support de pile (3), la butée de profondeur (4), les butées latérales (5, 6) et le dispositif de maintien (8) pouvant pivoter ensemble d'un angle de pivotement autour d'un axe de rotation parallèle à la direction de butée (A), entre une position de réception et une position d'alignement, et dans lequel le support de pile (3), la butée de profondeur (4), les butées latérales (5, 6) et/ou le dispositif de maintien (8) sont disposés sur un châssis commun (12), lequel peut pivoter autour de l'axe de rotation entre une position de réception et une position d'alignement, **caractérisé en ce que** le châssis commun (12) est relié à un entraînement vibratoire de telle sorte que la pile de profilés (1) puisse, en position d'alignement, être soumise à des mouvements oscillatoires pivotant essentiellement autour de l'axe de rotation, des vérins de réglage (14) agissant aux deux extrémités du châssis, par rapport à la direction de butée (A), des vérins de réglage (14) qui sont montés de manière rotative autour d'un axe de rotation s'étendant parallèlement à la direction de butée (A) sur le châssis (12) et/ou sur un bâti de base (15).

2. Dispositif selon la revendication 1, **caractérisé en ce qu'**une butée latérale (5) comporte plusieurs éléments de butée (17) espacés les uns des autres, qui peuvent être insérés dans des évidements correspondants du dispositif de maintien (8) s'étendant dans la direction de butée (A).

3. Dispositif selon la revendication 2, **caractérisé en ce que** les évidements du dispositif de maintien (8), s'étendant dans la direction de butée (A), sont formés par des tiges (18) parallèles et espacées les unes des autres.

4. Dispositif selon l'une des revendications 1 à 3, **caractérisé en ce que** l'une des butées latérales (5) peut être déplacée au moyen d'un entraînement linéaire (16) par rapport à la butée latérale fixe (6) située en face dans la direction de butée (A).

5. Dispositif selon la revendication 4, **caractérisé en ce que** la surface de butée (19) de la butée latérale fixe (6) forme avec le plan d'insertion un angle d'ouverture supérieur à 90°, de préférence de 96°.

6. Dispositif selon l'une des revendications 1 à 5, **caractérisé en ce que** la butée de profondeur (4) comprend une rangée de rouleaux d'appui montés de manière rotative, s'étendant dans la direction de butée (A).

7. Dispositif selon l'une des revendications 1 à 6, **caractérisé par** un convoyeur longitudinal (11) s'étendant dans une direction de transport longitudinale (L) pour la pile de profilés (1), ainsi que par un convoyeur transversal destiné au transfert de la pile de profilés (1) entre le convoyeur longitudinal (11) et l'unité d'alignement (2) dans une direction de transport transversale (Q).

8. Procédé d'alignement d'une pile de profilés (1), à l'aide d'un dispositif selon l'une des revendications 1 à 7, dans lequel la pile de profilés (1) à aligner est acheminée à travers le plan d'insertion vers la zone de réception (9) de l'unité d'alignement (2) et est placée, par sa face arrière opposée au plan d'insertion, contre la butée de profondeur (4), et en ce que, pour immobiliser la pile de profilés (1), les butées latérales (5, 6) et le dispositif de maintien (8) sont placés contre la pile de profilés (1), le support de pile (3), la butée de profondeur (4), les butées latérales (5, 6) et le dispositif de maintien (8) pivotent ensemble autour de l'axe de rotation parallèle à la direction de butée (A), passant de la position de réception et de la position d'alignement selon un angle de pivotement, puis sont ramenés dans la position de réception, après quoi la pile de profilés alignée (1) est évacuée de la zone de réception (9) de l'unité d'alignement (2), **caractérisé en ce que**, en position d'alignement, la pile de profilés (1) pivotée est soumise à des mouvements d'oscillation s'étendant dans le sens de rotation et/ou dans la direction de butée (A), la distance prédéfinie entre le dispositif de maintien (8) et la face supérieure (7) de la pile de profilés (1) pendant les mouvements d'oscillation étant comprise entre 1 et 5 % de la hauteur de la pile de profilés.
